# EUROPÄISCHE PATENTANMELDUNG

(11) **EP 0 787 953 A2**
(43) Veröffentlichungstag der Anmeldung: **06.08.1997**
(21) Anmeldenummer: 97101301.6
(22) Anmeldetag: 29.01.1997
(51) Int. Cl.: F24F 12/00

(54) **Klimaanlage mit Energierückgewinnung**

(30) Priorität: 02.02.1996 DE 19603694
(71) Anmelder: SCHAKO METALLWARENFABRIK FERDINAND SCHAD KG, 78600 Kolbingen (DE)
(72) Erfinder: Müller, Gottfried, 78600 Kolbingen (DE)
(74) Vertreter: Weiss, Peter, Dr. rer. nat.

(57) **Zusammenfassung**

Bei einer Klimaanlage zum Einbringen von frischer Luft in einen Raum und zum Ausbringen von verbrauchter Luft aus einem Raum weist ein Gehäuse (1, 1.1) zumindest eine Öffnung (19) zum Einlassen und eine Öffnung (18) zum Auslassen von Luft auf. Diesen Öffnungen ist wenigstens ein Auslaßelement (8) bzw. ein Einlaßelement (9) für Luft zugeordnet. Dabei ist in dem Gehäuse (1, 1.1) ein im Gegenstrom von Zu- und Abluft durchströmter Wärmetauscher (13) angeordnet.

## Beschreibung

Die vorliegende Erfindung betrifft eine Klimaanlage zum Einbringen von frischer Luft in und zum Ausbringen von verbrauchter Luft aus einem Raum mit einem Gehäuse, welches zumindest eine Öffnung zum Einlassen und eine Öffnung zum Auslassen von Luft aufweist, und dem wenigstens ein Auslaßelement und ein Einlaßelement für Luft zugeordnet sind.

Derartige Einrichtungen sind in vielfältiger Form und Ausführung auf dem Markt bekannt und gebräuchlich. Mit ihnen wird Luft und insbesondere frische Luft von außen einem Raum zugeführt und verbrauchte Luft einem Raum entnommen und von diesem abgeführt. Dabei können diese Klimaanlagen sowohl an ein Klimasystem angeschlossen oder auch direkt mit der äußeren Umgebung verbunden sein.

Auch sind Klimaanlagen bekannt, die schon vorgewärmte, verbrauchte Abluft zum Erwärmen von zuströmender, frischer Zuluft nutzen. Nachteilig ist allerdings bei herkömmlichen Klimaanlagen, daß der schon erwärmte Abluftstrom der verbrauchten Luft schlecht genutzt wird, um vorhandene Wärme wirtschaftlich zum Erwärmen von frischer Zuluft zu verwenden. Ebenso wird auch in warmen Jahreszeiten die kühlere Raumluft nicht zum Kühlen von Zuluft genutzt.

Ferner neigen herkömmliche Klimaanlagen stark zum Verschmutzen, so daß eine Wärmeübertragung durch verschmutzte Wärmeaustauschflächen beeinträchtigt wird, da eine isolierende Wirkung durch den Schmutz und insbesondere Staub od. dgl. Verunreinigungen entsteht.

Der vorliegenden Erfindung liegt die Aufgabe zugrunde, eine Klimaanlage zu schaffen, welche die o.g. Nachteile beseitigt und bei welcher ein Ausnutzen der Temperaturunterschiede zwischen Zuluft- und Abluftstrom optimiert ist, wobei gleichzeitig Energie aber auch Herstellungskosten reduziert werden sollen.

Zur Lösung dieser Aufgabe führt, daß in dem Gehäuse ein im Gegenstrom von Zu- und Abluft durchströmter Wärmetauscher angeordnet ist.

In das Gehäuse ist ein Wärmetauscher eingesetzt, welcher eine Mehrzahl von nebeneinander angeordneten und zueinander beabstandeten Wärmeaustauschflächen aufweist. Stirnseitig sind die Wärmeautauschflächen alternierend zumindest teilweise miteinander verbunden und bilden einen zieharmonikaförmigen Verbund, wobei zwischen benachbarten Wärmeaustauschflächen einzelne Kammern gebildet sind. Diese können rechteckförmig sein. Im Rahmen der Erfindung liegt aber auch eine koaxiale, rohrförmige Anordnung ineinander.

In alternierender Reihenfolge sind die einzelnen Kammern von der einen oder anderen stirnwärtigen Seite des Wärmetauschers zugänglich, so daß Zuluft und Abluft in getrennten Kammern aneinander vorbeiströmt. Wichtig ist allerdings hier, daß der Zugang der Kammern nur von ganz bestimmten Räumen aus erfolgt. In dem Gehäuse sind beispielsweise rechts und links neben dem Wärmetauscher Räume zum Ein- bzw. Ausbringen der Zu- bzw. Abluft gebildet.

Bei einem bevorzugten Ausführungsbeispiel der vorliegenden Er-findung sind, insbesondere in einer Rückwand des Gehäuses, im Bereich der Räume Öffnungen vorgesehen, an die zumindest ein Einlaß- oder ein Auslaßstutzen anschließt.

Ein Raum weist in einer Frontplatte des Gehäuses Auslaßelemente auf, wie beispielswiese Düsen od. dgl., um Luft, insbesondere Frischluft, in einen umgebenden Raum abzugeben. Diese Luft wird dem am Wärmetauscher diagonal gegenüberliegenden Raum, welcher als Einlaßraum für Zuluft ausgebildet ist, von außen zugeführt, die Luft strömt dann diagonal oder wellenförmig durch einzelne Lamellenkammern des Wärmetauscher zu dem Raum mit den Auslaßelementen. Dieses Durchströmen erfolgt in einzelnen zu den jeweiligen Räumen hin geöffneten Kammern, wobei diese zu jeweils benachbarten, von dem Abluftstrom durchströmten Kammern über Wärmeaustauschflächen Wärme bzw. Temperaturunterschiede austauschen.

Die benachbarten Kammern werden von Abluft durchströmt, welche über ein in die Frontplatte des Gehäuses eingesetztes Einlaßelement, insbesondere als Gitter ausgebildet, angesaugt wird. Die Luft durchströmt von unten diagonal schräg nach oben oder wellenförmig den Wärmetauscher, sodaß die erwärmte, verbrauchte Luft in einen oberen Auslaßraum geführt und über den Auslaßstut-zen mittels bevorzugter Weitwurfdüse in eine Umgebung ausgebracht wird.

Wesentlich dabei ist, daß die verbrauchte Raumluft im Gegenstromverfahren den Wärmetauscher durchströmt, wobei ihre Temperatur an jeweils benachbarte Kammern abgegeben wird, die von frischer Luft durchströmt werden, so daß ein Wärmeaustausch zwischen verbrauchter und frischer Zuluft geschieht. Somit kann die zugeführte Luft direkt in der Klimaanlage ohne zusätzliche Kosten erwärmt oder gekühlt werden.

Damit ein Wärmeaustausch über lange Zeit optimiert ist, wird die zugeführte Frischluft im Einlaßraum, bevor sie in die einzelnen Kammern des Wärmetauschers eintritt, über ein bevorzugt diagonal in den Einlaßraum eingesetztes, wiederauswechselbares Filterelement von Verunreinigungen gereinigt.

Ebenso ist daran gedacht, dem Einlaßelement für Abluft ein Filterelement nachzuschalten, um Staubpartikel und andere Verunreinigungen aus der verbrauchten Luft zu entfernen und eine Ablagerung von Verunreinigungen an den einzelnen Wärmeaustauschflächen zu verhindern.

Die Filterelemente können selbstverständlich leicht ausgewechselt werden und auch Aktivkohlebestandteile aufweisen, um eine mögliche Geruchsbildung zu neutralisieren.

Damit Abluft und frische Zuluft transportiert werden können, ist in den Einlaß- bzw. Auslaßstutzen jeweils ein, bevorzugt elektrisch betriebener Ventilator eingesetzt, der die Luftströme befördert. Somit läßt sich auch leicht ein Luftstrom regeln.

In einem weiteren Ausführungsbeispiel der vorliegenden Erfindung sind gleichfalls, wie oben beschrieben, rechts und links neben dem Wärmetauscher jeweils zwei getrennte Räume übereinander oder nebeneinander gebildet.

Dabei sind zwei sich gegenüberliegende Räume als Auslaß- bzw. Einlaßräume ausgebildet, an die wie oben beschrieben, Auslaß- bzw. Einlaßstutzen an der Rückwand des Gehäuses anschließen. In der Frontplatte sind ebenfalls gegenüberliegend ein Auslaßelement und ein Einlaßelement wiederlösbar eingesetzt. Diese sind beispielsweise als Gitter, Lochblech, Düsen od. dgl. ausgebildet.

Auch hier wird die frische Luft diagonal durch den Wärmetauscher bzw. dessen einzelne Kammern geführt.

Die Klimaanlage ist sowohl für den Sommer als auch für den Winter geeignet. Kühle, verbrauchte Raumluft kühlt im Sommer die in benachbarten Kammern strömende warme, frische Zuluft, so daß ein Energieaufwand zum Kühlen eines Zimmers oder Gebäudes erheblich reduziert ist.

Dagegen findet ein Austausch von Wärme statt, wenn in kalten Monaten erwärmte, verbrauchte Abluft durch den Wärmetauscher geführt wird und kalte, frische Zuluft diese Temperatur der Abluft annimmt.

Diese Klimaanlage kann universell eingesetzt werden, insbesondere für jedes Gebäude und jeden Raum, wobei sich hier unterschiedlichste Einbaumöglichkeiten bieten. Es werden ca. 50% - 70% der Energie bzw. Wärme oder Kälte ausgetauscht und so viel zusätzlicher Aufwand gespart.

Zum einen kann die Klimaanlage und insbesondere das Gehäuse der Klimaanlage direkt an einer Innenwand angebracht werden, wobei die Einlaß- bzw. Auslaßstutzen durch diese Wand geführt werden und frische Luft direkt aus der Umgebung ansaugen bzw. verbrauchte Luft weit in diese Umgebung ausbringen. Selbstverständlich liegt auch im Rahmen der vorliegenden Erfindung, daß beispielsweise Einlaß- bzw. Auslaßstutzen an ein vorhandenes Klimasystem angeschlossen werden, wenn getrennte Leitungen für Zu- und Abluft vorgesehen sind. Dann können die Einlaß- oder Auslaßstutzen auch den Seitenwänden zugeordnet sein.

Wichtig ist hier allerdings auch, daß einzelne Klimasysteme in einem Gebäude mit der erfindungsgemäßen Klimaanlage nachgerüstet werden können, da sie sich unabhängig einzeln betreiben und regeln lassen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine teilweise aufgebrochene Vorderansicht einer erfindungsgemäßen Klimaanlage;
Figur 2 eine Draufsicht auf die Klimaanlage gemäß Figur 1;
Figur 3 eine Rückansicht der Klimaanlage gemäß Figur 1;
Figur 4 einen Längsschnitt durch die Klimaanlage gemäß Figur 1 entlang Linie IV-IV;
Figur 5 einen Längsquerschnitt durch den Luftauslaß gemäß Figur 1 entlang Linie V-V;
Figur 6 einen Querschnitt durch die Klimaanlage gemäß Figur 1 entlang Linie VI-VI;
Figur 7 einen Querschnitt durch die Klimaanlage gemäß Figur 1 entlang Linie VII-VII;
Figur 8 eine teilweise aufgebrochene Vorderansicht eines weiteren Ausführungsbeispiels der erfindungsgemäßen Klimaanlage;
Figur 9 eine Draufsicht auf die Klimaanlage gemäß Figur 7;
Figur 10 eine Rückansicht der Klimaanlage gemäß Figur 7;
Figur 11 einen Längsschnitt durch die Klimaanlage gemäß Figur 7 entlang Linie XI-XI;
Figur 12 einen Längsquerschnitt durch die Klimaanlage gemäß Figur 7 entlang Linie XII-XII;
Figur 13 eine perspektivische Ansicht eines erfindungsgemäßen Wärmetauschers.

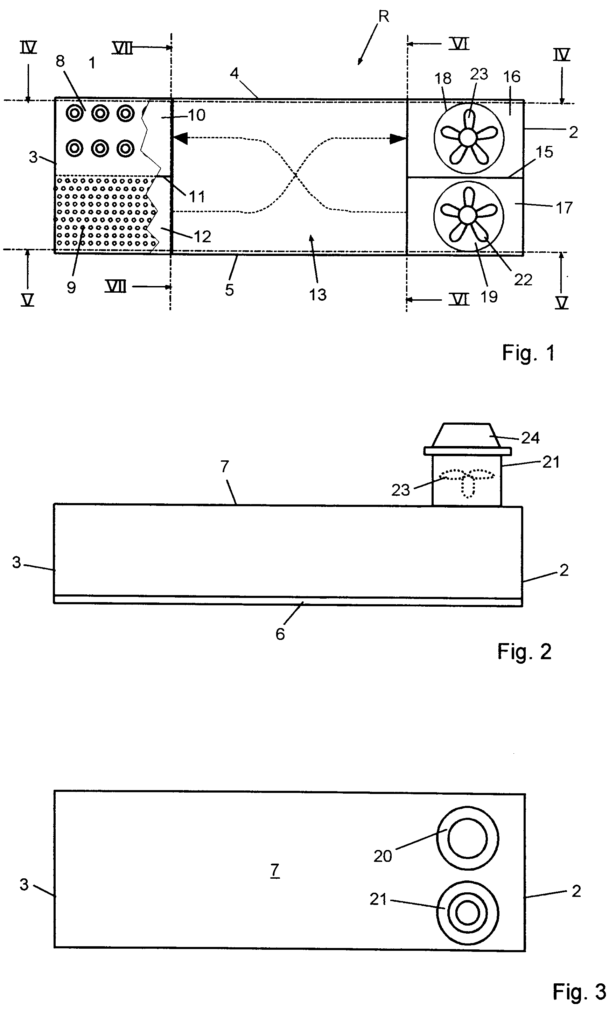

Gemäß Figur 1 weist eine erfindungsgemäße Klimaanlage R ein Gehäuse 1 auf, welches aus Seitenwänden 2, 3 und daran anschließenden Wänden 4, 5 besteht, die über eine Frontplatte 6 und Rückwand 7 (Figur 3) zu einer Einheit verbunden sind. In die Frontplatte 6 ist ein Auslaßelement 8 und darunterliegend ein Einlaßelement 9 eingesetzt.

Das Auslaßelement 8, welches an das Einlaßelement 9 anschließt, kann eine Vielzahl von hier dargestellten Düsen oder sonstigen Auslaßelementen aufweisen, um Luft in einen Raum einzubringen. Das darunterliegende Einlaßelement 9 ist bevorzugt als Lochblech ausgebildet, durch welches verbrauchte Raumluft in die Klimaanlage R eintreten und von dort nach außen abgeführt werden kann.

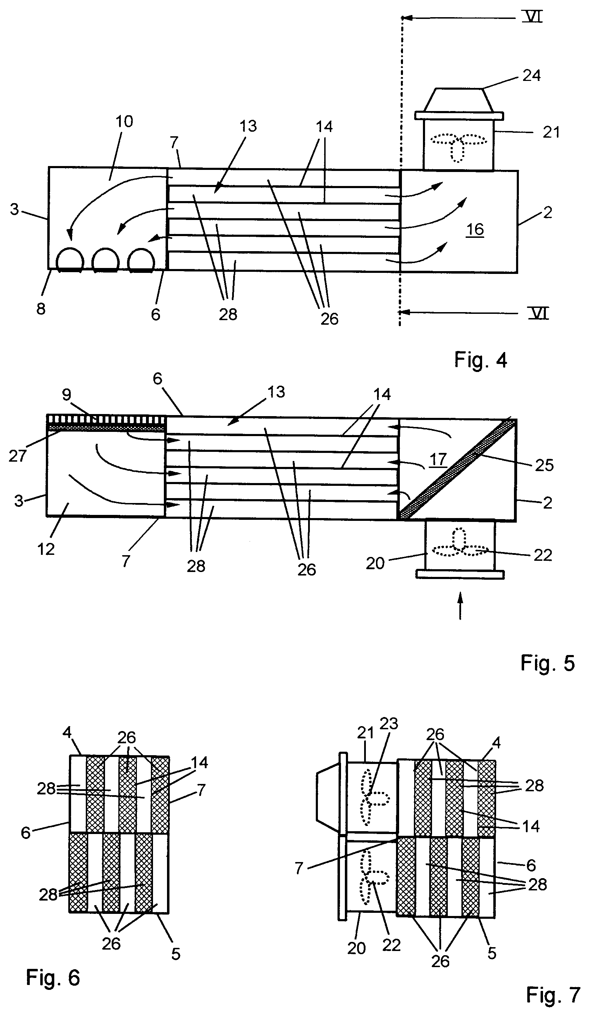

Der hinter dem Auslaßelement 8 gebildete Raum 10 (Figur 4) wird über ein in Figur 1 gestrichelt angedeutetes Trennelement 11 von einem über das Einlaßelement 9 zugänglichen Raum 12 (Figur 5) getrennt.

Neben dem Auslaßelement 8 bzw. Einlaßelement 9 ist in das Gehäuse 1 ein Wärmetauscher 13 eingesetzt, welcher aus einzelnen nebeneinander angeordneten zieharmonikaartig zusammengesetzten Wärmeaustauschflächen 14 besteht, welche, wie in den Figuren 4 und 5 dargestellt, in das Gehäuse 1 eingesetzt sind. An den Wärmetauscher 13 schließt, durch ein weiteres Trennelement 15 unterteilt, ein Auslaßraum 16 und darunterliegend ein Einlaßraum 17 an.

In der Rückwand 7 sind im Bereich des Auslaßraumes 16 und des Einlaßraumes 17 jeweils Öffnungen 18, 19 ausgebildet, an die sich von außen (Figuren 2 und 3) jeweils ein Einlaßstutzen 20 und darüberliegend ein Auslaßstutzen 21 anschließen.

In jeden Stutzen 20, 21 ist ein bevorzugt elektrisch angetriebener Ventilator 22, 23 eingesetzt, um Luft zu- bzw. abzuführen. Das Abführen verbrauchter Luft erfolgt durch den Auslaßstutzen 21, welcher bevorzugt mit einer Weitwurfdüse 24 versehen ist, um verbrauchte Luft weit in eine äußere Umgebung auszubringen.

Der darunter angeordnete Einlaßstutzen 20 saugt frische Zuluft mittels dem Ventilator 22 aus einer Umgebung von außen an und befördert die Luft durch den Wärmetauscher 13, wobei die Luft durch das Auslaßelement 8 und insbesondere durch dessen dort eingesetzte Düsen od. dgl. in einen Raum eingebracht wird.

Die Klimaanlage R soll beispielsweise in einen Raum oder Gebäude eingesetzt oder an ein bestehendes Klimasystem angeschlossen werden, welches Frischluft und Abluft getrennt führt. Bevorzugt durchgreifen Einlaßstutzen 20 und Auslaßstutzen 21 eine Außenwand des Gebäudes und führen ins Freie. Das Gehäuse 1 der Klimaanlage R kann beispielsweise durch Verschalungen verdeckt oder auch direkt innen auf eine Wand aufgesetzt sein.

Die Funktionsweise der vorliegenden Erfindung ist die folgende:

Frischluft wird mittels des Ventilators 22 über den Einlaßstutzen 20 in den Einlaßraum 17 befördert und über ein bevorzugt schräg in den Einlaßraum 17 eingesetztes Filterelement 25 von Kleinstpartikeln und Verunreinigungen gereinigt. Anschließend strömt die frische Luft, wie in Figur 5 dargestellt, aus dem Einlaßraum 17 zwischen einzelne Wärmeaustauschflächen 14, wobei nur zu Kammern 28 alternierende Kammern 26 des Wärmetauschers 13 von frischer Luft durchströmt werden können. Die Luft wird durch die Kammern 26 diagonal durch den Wärmetauscher 13 in den Raum 10 geführt und von dort über das Auslaßelement 8 in ein Zimmer, Gebäude od. dgl. ausgebracht.

Dagegen wird Abluft von einem Zimmer oder Gebäude durch das Einlaßelement 9 in den Raum 12 gesaugt. Sie wird dann in den Kammern 28 diagonal durch den Wärmetauscher 13 in den Auslaßraum 16 geführt und von dort über den Auslaßstutzen 21 weit in eine Umgebung ausgebracht. Dem Einlaßelement 9 ist ein Filter 27 (Figur 5) nachgeschaltet

Wie gestrichelt in Figur 1 dargestellt, durchströmt verbrauchte und frische Luft im Gegenstromverfahren den Wärmetauscher 13, wobei abwechselnd die Kammern 26 und 28 nebeneinander angeordnet sind und jeweils gegeneinander Wärme austauschen. Wesentlich ist jedoch, daß das Durchströmen in getrennten Kammern 26, 28 erfolgt und Wärmeaustausch zwischen abgeführter verbrauchter und zugeführter frischer Luft ermöglicht wird.

In Figur 6 ist dargestellt, daß die einzelnen Kammern 26 im Bereich des oberen Auslaßraumes 16 stirnseitig geschlossen, dagegen im Bereich des unteren Einlaßraumes 17 stirnseitig geöffnet sind. Entsprechend alternierend dazu sind die Kammern 28 im Bereich des oberen Auslaßraumes 16 stirnseitig geöffnet und im Bereich des darunterliegenden Einlaßraum 17 stirnseitig geschlossen.

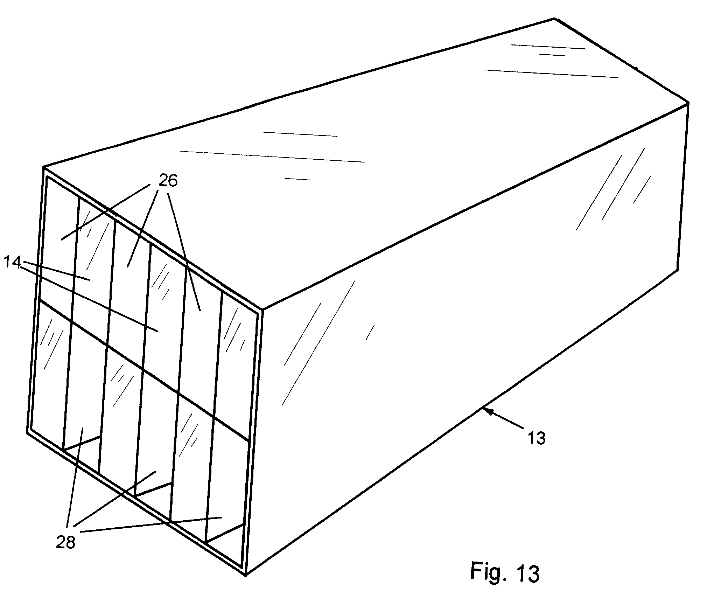

Ferner ist aus der Sicht der Räume 10, 12 (Figur 7), welche über das Trennelement 11 voneinander getrennt sind, eine entsprechende alternierende Anordnung der Kammern 26, 28 mit stirnwärtigen Öffnungen zum Wärmetauscher 13 hin aufgezeigt. Im Bereich des oberen Raumes 10 sind die Kammern 26 stirnseitig geöffnet und im Bereich des Raumes 9 darunterliegend stirnwärtig verschlossen, wobei die Kammer 28 im Bereich des Raumes 10 stirnwärtig verschlossen sind und darunterliegend im Raum 9 stirnwärtig offen vorliegen. Deutlicher ist dies in Figur 13 gezeigt.

Gerade erwärmte Abluft kann kühlere Frischluft durch das Gegenstromverfahren erwärmen, aber auch im umgekehrten Fall, beispielsweise in heißen Monaten, kann kühlere Abluft eine wärmere Zuluft in der Klimaanlage R abkühlen.

Damit ein großer Austausch von Wärme ständig gewährleistet ist, wird verbrauchte Raumluft unmittelbar am Einlaßelement 9 durch den Filter 27 von Verunreinigungen gereinigt und ebenfalls zugeführte Frischluft vor Eintreten in den Wärmetauscher 13 im Einlaßraum 17 von dem Filterelement 25 von Verunreinigungen befreit, so daß Frischluft und verbrauchte Luft während des Durchströmens des Wärmetauschers 13 frei von Verunreinigungen sind, so daß die einzelnen Wärmeaustauschflächen 14 nicht verschmutzt werden. Daher ist ein optimaler Austausch von Wärme und/oder Kälte auf lange Sicht gewährleistet.

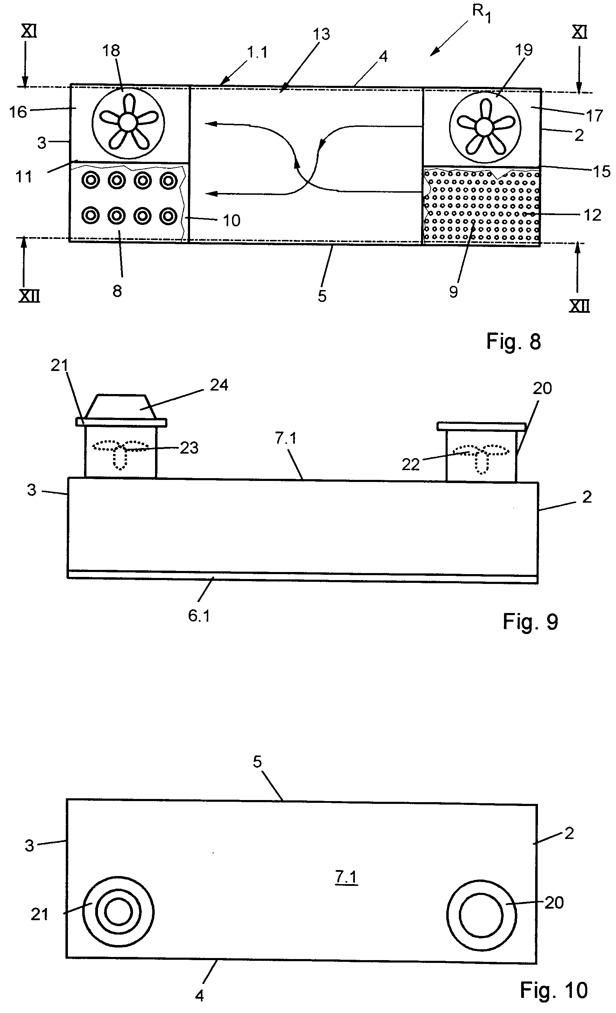

In einem weiteren Ausführungsbeispiel der vorliegenden Erfindung gemäß Figur 8 weist eine Klimaanlage R₁ ein Gehäuse 1.1 auf, welches wiederum aus den Seitenwänden 2, 3 und Wänden 4, 5 besteht.

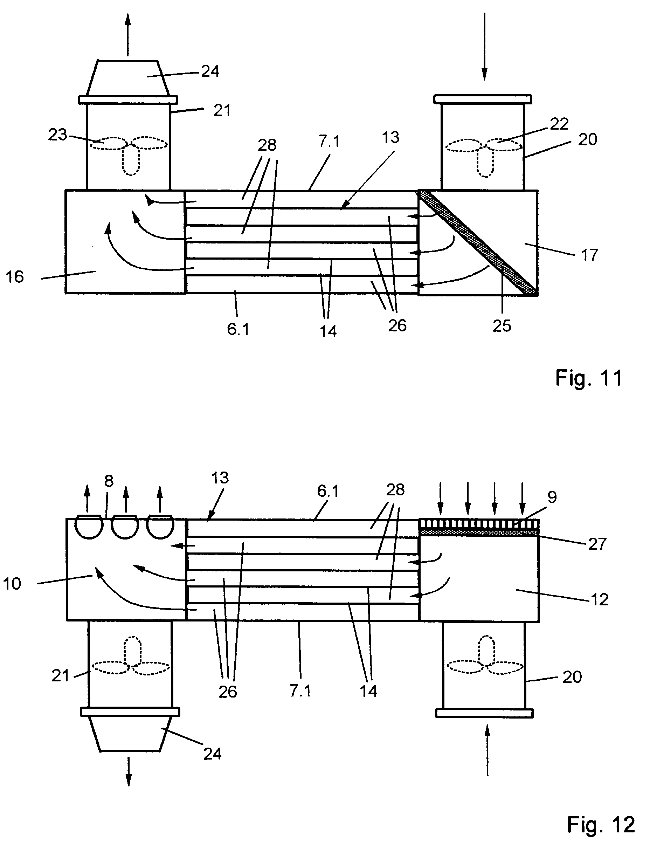

Mittig ist in das Gehäuse 1.1 der Wärmetauscher 13 in oben beschriebener und Figur 13 gezeigter Bauart eingesetzt, wobei rechts und links neben dem Wärmetauscher 13.1 die Räume 10, 12, 16, 17 vorgesehen, jedoch im Gegensatz zu den Figuren 1-7 vertauscht sind. Der Raum 16 weist die Öffnung 18 auf, in die der Auslaßstutzen 21 (Figur 11) greift. Unterhalb des Raumes 16 ist, von dem Trennelement 11 abgeschottet, der Raum 10 gebildet. In einer Frontplatte 6.1 ist im Bereich des Raumes 10 das Auslaßelement 8 mit einer beliebigen Anzahl von Düsen od. dgl. Auslaßelementen eingesetzt.

Rechts neben dem Wärmetauscher 13 schließt sich der Raum 17 an, welcher die Öffnung 19 in einer Rückwand 7.1 des Gehäuses 1.1 aufweist, an welche sich, entsprechend Figur 11, der Einlaßstutzen 20 zum Zuführen von Luft anschließt.

Der Raum 17 ist ebenfalls, wie oben beschrieben, über das Trennelement 15 zu dem darunterliegenden Raum 12 abgeschottet, welcher zur Frontplatte 6.1 hin das Einlaßelement 9, insbesondere als Lochblech ausgebildet, aufweist.

Auslaßelement 8 bzw. Einlaßelement 9 sind von dem Gehäuse 1.1 oder von der Frontplatte 6.1 abnehmbar ausgebildet. Ferner ist, wie in Figur 10 ersichtlich, der Einlaßstutzen 20 und auch der Auslaßstutzen 21 mit jeweils dem Ventilator 22, 23 versehen, welche bevorzugt elektrisch angetrieben sind.

Dem Auslaßstutzen 21 ist ebenfalls, wie oben beschrieben, eine Weitwurfdüse 24 zugeordnet, um verbrauchte Luft weit in eine Umgebung auszubringen.

Die Funktionsweise dieser Klimaanlage R₁ ist folgende:

Wie in Figur 8 mit Pfeilen angedeutet, wird frische Luft durch die Öffnung 19 von dem Ventilator 22 angesaugt und in den Raum 17 transportiert. Von dort strömt die frische Luft durch das bevorzugt diagonal in den Raum 17 eingesetzes Filterelement 25 (Figur 11) und strömt anschließend durch Kammern 26 in dem Wärmetauscher 13.

Durch den Wärmetauscher 13 strömt dann die frische Luft nach unten diagonal in den Raum 10 und wird dort von den Düsen od. dgl. in das Auslaßelement 8 eingesetzten Einrichtungen in einen umgebenden Raum, Zimmer od. dgl. ausgebracht .

Verbrauchte Luft hingegen wird durch das Einlaßelement 9, welches insbesondere als Lochblech ausgebildet ist, angesaugt, wie es in Figur 12 angedeutet ist, und wird von dem direkt dem Einlaßelement 9 nachgeschalteten Filter 27 gereinigt, welcher ggfs. austauschbar in den Einlaßraum 12 eingesetzt ist. Von dort strömt, wie in Pfeilrichtung dargestellt, die verbrauchte Luft stirnseitig in dort geöffnete Kammern 28 und wird, wie in Figur 8 dargestellt, nach oben diagonal durch den Wärmetauscher 13 in den Raum 16 geführt. Die Luft kann dann durch den Auslaßstutzen 21 nach außen ins Freie abgeführt werden.

Im Wärmetauscher 13 durchströmen Frischluft und Abluft jeweils benachbarte Kammern 26, 28, so daß ein Wärmeaustausch zwischen einzelnen, benachbarten Transportkammern 26, 28 über die Wärmeaustauschflächen 14 stattfinden kann. Die Anordnung einzelner Transportkammern 26, 28 zueinander geschieht in oben beschriebener Weise.

Auch hier ist gewährleistet, daß Zu- und/oder Abluft, welche den Wärmetauscher 13 durchströmen vor dem Eintreten in den Wärmetauscher 13, insbesondere vor Eintreten in die jeweiligen Kammern 26, 28, von Verunreinigungen, Staubpartikel und dgl. befreit werden. Somit wird ein Austauschen von Wärme in der Klimaanlage R₁ mit einem hervorragenden Wärmeübergangskoeffizienten geschaffen.

Auch hier ist daran gedacht, daß Einlaßstutzen 20 und Auslaßstutzen 21 in eine Mauer, insbesondere Außenwand, eingesetzt sein können, um von außen Luft anzusaugen und verbrauchte Luft nach außen abzugeben. Innen kann das Gehäuse 1.1 auf die Innenwand aufgesetzt oder über eine Verschalung verdeckt in einem Raum oder Gebäude integriert sein.

Im Rahmen der vorliegenden Erfindung soll auch liegen, daß der Einlaßstutzen 20 und/oder der Auslaßstutzen 21 bzw. die Öffnungen 18, 19 an ein bestehendes Klimasystem, insbesondere Zu- bzw. Abluftleitungen angeschlossen werden können.

Ferner kann in das Gehäuse 1, 1.1 auch zusätzlich ein hier nicht dargestellter Lufterhitzer oder Kühler eingesetzt sein. Diese können Frischluft vor Eintritt in den Wärmetauscher 13 oder vor Austritt aus dem Auslaßelement 8 in einen Raum auf eine bestimmte Temperatur vorheizen oder kühlen.

## Patentansprüche

1. Klimaanlage zum Einbringen von frischer Luft in einem Raum und zum Ausbringen von verbrauchter Luft aus einem Raum mit einem Gehäuse (1, 1.1), welches zumindest eine Öffnung (19) zum Einlassen und eine Öffnung (18) zum Auslassen von Luft aufweist, und dem wenigstens ein Auslaßelement (8) und ein Einlaßelement (9) für Luft zugeordnet sind,
dadurch gekennzeichnet,
daß in dem Gehäuse (1, 1.1) ein im Gegenstrom von Zu- und Abluft durchströmter Wärmetauscher (13) angeordnet ist.

2. Klimaanlage nach Anspruch 1, dadurch gekennzeichnet, daß der Wärmetauscher (13) eine Mehrzahl von Wärmeaustauschflächen (14) aufweist, welche zueinander beabstandet einzelne Kammern (26, 28) bilden.

3. Klimaanlage nach Anspruch 2, dadurch gekennzeichnet, daß einzelne Kammern (26) alternierend mit einzelnen Kammern (28) nebeneinander beabstandet angeordnet zu dem Wärmetauscher (13) verbunden sind.

4. Klimaanlage nach wenigstens einem der Ansprüche 1 bis 3, dadurch gekennzeichnet, daß an den Wärmetauscher (13) stirnseitig einends ein Raum (16) und darunter oder danebenliegend ein weiterer Raum (17) anschließt.

5. Klimaanlage nach Anspruch 4, dadurch gekennzeichnet, daß der Raum (16) über ein Trennelement (15) von dem weiteren Raum (17) getrennt ist.

6. Klimaanlage nach wenigstens einem der Ansprüche 1 bis 5, dadurch gekennzeichnet, daß an den Wärmetauscher (13) stirnseitig andernends ein Raum (10) und darunter oder danebenliegend ein weiterer Raum (12) anschließt.

7. Klimaanlage nach Anspruch 6, dadurch gekennzeichnet, daß der Raum (10) über ein Trennelement (11, 11.1) von dem Raum (12) getrennt ist.

8. Klimaanlage nach Anspruch 6 oder 7, dadurch gekennzeichnet, daß die Kammern (28) im Bereich der Räume (12 und 16) stirnseitig geöffnet und im Bereich der Räume (10 und 17) stirnseitig geschlossen sind.

9. Klimaanlage nach einem der Ansprüche 6 bis 8, dadurch gekennzeichnet, daß die Kammern (26) im Bereich der Räume (10 und 17) stirnseitig geöffnet und im Bereich der Räume (12 und 16) stirnseitig geschlossen sind.

10. Klimaanlage nach wenigstens einem der Ansprüche 1 bis 9, dadurch gekennzeichnet, daß das Gehäuse (1, 1.1) Seitenwände (2, 3) und daran angrenzende Wände (4, 5) aufweist, wobei eine Frontplatte (6, 6.1) und eine Rückwand (7, 7.1) das Gehäuse (1, 1.1) verschließen.

11. Klimaanlage nach Anspruch 10, dadurch gekennzeichnet, daß in die Öffnung (18) der Rückwand (7) ein Auslaßstutzen (21) eingesetzt ist, welcher in den Raum (16) führt.

12. Klimaanlage nach Anspruch 10 oder 11, dadurch gekennzeichnet, daß in die Öffnung (19) der Rückwand (7) ein Einlaßstutzen (20) eingesetzt ist, welcher den in Raum (17) führt.

13. Klimaanlage nach Anspruch 11 oder 12, dadurch gekennzeichnet, daß dem Auslaßstutzen (21) und dem Einlaßstutzen (20) zumindest ein Ventilator (22, 23) zugeordnet ist.

14. Klimaanlage nach wenigstens einem der Ansprüche 6 bis 13, dadurch gekennzeichnet, daß im Bereich des Raumes (10) in die Frontplatte (6, 6.1) zumindest ein Auslaßelement (8) wieder lösbar eingesetzt ist.

15. Klimaanlage nach wenigstens einem der Ansprüche 6 bis 14, dadurch gekennzeichnet, daß im Bereich des Raumes (12) in die Frontplatte (6, 6.1) zumindest ein Einlaßelement (9) wieder lösbar eingesetzt ist.

16. Klimaanlage nach wenigestens einem der Ansprüche 6 bis 15, dadurch gekennzeichnet, daß Zu- und Abluft jeweils in getrennten Kammern (26 bzw. 28) diagonal oder wellenförmig durch den Wärmetauscher (13) im Gegenstromverfahren von dem Raum (17 bzw. 12) zum Raum (10 bzw. 16) geführt ist.
